# EUROPÄISCHE PATENTANMELDUNG

(11) **EP 2 415 575 A1**
(43) Veröffentlichungstag der Anmeldung: **08.02.2012**
(21) Anmeldenummer: 10172066.2
(22) Anmeldetag: 05.08.2010
(51) Int. Cl.: B29C 33/42, B29C 45/00, B29C 37/00, B60R 13/00, B64C 1/12

(54) **Geschlossene spritzgegossene Leichtbaugitterstruktur**

(71) Anmelder: LANXESS Deutschland GmbH, 51369 Leverkusen (DE)
(72) Erfinder: Koch, Boris, 42929 Wermelskirchen (DE); Lutter, Frank, 40629 Düsseldorf (DE)

(57) **Zusammenfassung**

Die vorliegende Erfindung betrifft eine geschlossene spritzgegossene Leichtbaugittersturktur auf Basis eines Kunststoffes, ein Verfahren zu ihrer Herstellung und ihre Verwendung.

## Beschreibung

Die vorliegende Erfindung betrifft eine geschlossene spritzgegossene Leichtbaugitterstruktur auf Basis eines Kunststoffes, ein Verfahren zu ihrer Herstellung und ihre Verwendung.

Spritzgegossene Rippen zur Versteifung der Formteilwände von thermoplastischen Spritzgießteilen sind bekannt und finden in der Praxis schon seit langer Zeit Anwendung. Die Versteifungsrippen werden nach den Regeln der fertigungsgerechten Gestaltungslehre ausgelegt, d.h. ein bestimmtes Rippen/Grundwanddicken-Verhältnis ist einzuhalten, um am Spritzgießteil Einfallstellen, Verzug, Entformungsschwierigkeiten, zu hohe Fülldrücke und zu lange Zykluszeiten zu vermeiden. Je nach einzusetzendem thermoplastischen Kunststoff liegt das Rippen/Grundwanddickenverhältnis in einem Bereich von 1:2 bis 1:5. In jedem Fall sollte die versteifende Rippe immer deutlich dünner sein, als die Grundwanddicke des Formteils.

Leichtbaustrukturen mit einer gitterförmigen Tragstruktur und einer dünnen, das Gitter überspannenden Außenfläche/wand sind insbesondere aus den Luftfahrt bekannt. Sie finden Anwendung z.B. in Tragflügeln, Leitwerken oder im Rumpf von Flugzeugen oder Zeppelinen. Grundsätzlich gilt, diese Strukturen werden alle in verschiedenen Einzelteilen gefertigt und mit bestimmten Fügeverfahren zu einem Leichtbauteil zusammengebaut.

So sind Leichtbau-Strukturbauteile des Standes der Technik, insbesondere durch deren physikalischen Aufbau oder deren physikalische Zusammensetzung charakterisiert.

EP 1 439 121A1 beschreibt beispielsweise ein Leichtbau-Strukturbauteil insbesondere für Flugzeuge, bestehend aus mindestens einem Hautblech und darauf längs oder quer oder längs und quer angeordneten Versteifungselementen, die jeweils mit ihrem Fuß stoffschlüssig vollständig oder zumindest teilweise mit dem Hautblech verbunden sind, dadurch gekennzeichnet, dass der Steg des Versteifungselement auf seiner dem Hautblech zugewandten Seite aus zwei Schenkeln besteht, die beide mittels zweier getrennter Fügezonen stoffschlüssig mit dem Hautfeld verbunden sind.

Aus WO 99/52703 A1 ist ein Strukturbauteil bekannt, das eine formbildende langfaserverstärkte thermoplastische Matrix und eine integrierte Tragstruktur aufweist, welche aus konsolidierten Endloserfaser-Strängen mit thermoplastischer Matrix besteht. Die Tragstruktur weist mindestens eine kraftübertragende innere Verbindungsstelle zweier Endlosfaser-Stränge auf. Die Langfaser-Matrix und die Endlosfaser-Matrix sind kompatibel und an ihren gegenseitigen Kontaktflächen miteinander verschmolzen. Dies ergibt leichte, einfach, rasch und kostengünstig herstellbare tragende Strukturbauteile.

EP 370 342 A2 beschreibt ein Leichbauteil aus einem schalenförmigen Grundkörper, dessen Innenraum Verstärkungsrippen aufweist, welche mit dem Grundkörper fest verbunden sind, dadurch gekennzeichnet, dass die Verstärkungsrippen aus angespritztem Kunststoff bestehen und deren Verbindung mit dem Grundkörper an diskreten Verbindungsstellen über Durchbrüche im Grundkörper erfolgt, durch welche der Kunststoff hindurch- und über die Flächen der Durchbrüche hinausreicht.

Nachteilig an den Strukturbauteilen des Standes der Technik ist die Tatsache, dass im Fall von thermoplastischen Spritzgießteilen ein hoher Materialeinsatz erforderlich ist um eine hohe Steifigkeit zu erzielen. Dies führt zu hohen Bauteilgewichten und hohen Fertigungskosten. Im Fall von nichtspritzgegossenen Leichtbaustrukturen ist von Nachteil, dass es sich um mehrteilige, nicht in einem Prozessschritt herstellbare Strukturen handelt wodurch sich ebenfalls höhere Fertigungskosten bei den Ausführungen des Standes der Technik ergeben..

Für die Entwicklung und Konstruktion thermoplastischer Spritzgießteile, insbesondere aus faserverstärkten Thermoplasten lag die Aufgabe zugrunde durch konstruktive Maßnahmen eine signifikante Gewicht- und Kosteneinsparung zu erreichen, ohne wesentliche mechanische als auch prozesstechnische Eigenschaftsverluste am fertigen Bauteil zu erhalten.

Lösung der Aufgabe und Gegenstand der vorliegenden Erfindung ist eine geschlossene spritzgegossene Leichtbaugitterstruktur erhältlich unter Verwendung eines einzelnen thermoplastischen Kunststoffs indem im Spritzgießverfahren der Füllvorgang des Spritzgießteils in einem einzigen Prozessschritt über die Gitterstege und nicht über die Flächen erfolgt und die Gitterzwischenräume aus den Gitterstegen heraus als dünne Flächen geschlossen werden, wobei das Rippen/Grundwanddicken-Verhältnis zwischen 10:1 bis 3:1. Überraschenderweise kann somit bei spritzgegossenen Bauteilen der Materialeinsatz deutlich reduziert werden ohne Einbußen bei der Steifigkeit des Bauteils hinnehmen zu müssen. Das Bauteilgewicht wird reduziert, ebenso die Fertigungskosten.

Damit steht die Konstruktion dieser geschlossenen spritzgegossenen Leichtbaugitterstruktur genau im Gegensatz zu der bisher geltenden Gestaltungslehre für verrippte Spritzgießteile die nämlich üblicherweise ein Rippen/Grundwanddicken-Verhältnis zwischen 1:2 und 1:5 je nach verwendetem thermoplastischen Kunststoff aufweisen.

Prinzipiell ist der erfindungsgemäße Strukturaufbau einer geschlossenen spritzgegossenen Leichtbaugitterstruktur aus der Luftfahrt, z.B. aus dem Zeppelinbau, oder den Flugzeugbau bekannt. Diese Konstruktionen sind jedoch in mehreren Einzelteilen aufgebaut. Im Gegensatz zur vorliegenden Erfindung werden dort Holz- oder Aluminium-Gitterstrukturen mit Folien bzw. Blechelementen überspannt, oder aus faserverstärkten duroplastischen Kunststoffwerkstoffen in mehreren Fertigungsschritten hergestellt.

Neuartig und Gegenstand der vorliegenden Erfindung ist die Herstellung einer solchen geschlossenen spritzgegossenen Leichtbaugitterstruktur in einem einzigen Prozessschritt, dem Spritzgießzyklus, und die Verwendung eines einzelnen thermoplastischen Kunststoffs, vorzugsweise einem glasfaserverstärkten Kunststoff, als Leichtbauwerkstoff für Struktur und Schließfläche gleichzeitig.

Die Füllung eines solchen neuartigen Spritzgieß-Formteils steht ebenfalls genau im Gegensatz zu einem Standardspritzgießteil. Die Ausbreitung der Spritzgießschmelze erfolgt über die Rippenstruktur, anstatt über die Grundwand. Die dünnen Grundwände des Leichtbauteils werden aus den Rippen heraus gefüllt. Im Gegensatz dazu werden die Rippen im Standardspritzgießen aus der Grundwand heraus gefüllt. In den Rippen wird dadurch, im Gegensatz zu einer durchgehenden Platte konstanter Dicke, eine hohe Glasfaserorientierung, ähnlich wie in einem Normzugstab, erreicht. Die Eigenschaften des Bauteils, wie Steifigkeit, Festigkeit, Ausdehnung, Schwindung, usw. werden hierdurch isotroper und unterscheiden sich dadurch wesentlich zu denen einer Standardkonstruktion. Schwachstellen im Standardspritzgießteil, wie Störstellen in den Rippen infolge von Entlüftungsproblemen treten nicht auf.

Überraschenderweise kann durch ein erfindungsgemäßes Spritzgießteil eine Gewichtsersparnis von bis zu 50 % gegenüber einem herkömmlichen Spritzgießteil erzielt werden, ohne Steifigkeitsverluste oder prozesstechnische Nachteile zu bekommen.

Das Verfahren des Spritzgießens zeichnet sich dadurch aus, dass der Rohstoff, bevorzugt in Granulatform, in einem beheizten zylindrischen Hohlraum aufgeschmolzen (plastifiziert) und als Spritzmasse unter Druck in einem temperierten Hohlraum gespritzt wird. Nach dem Abkühlen (Erstarren) der Masse wird das Spritzgussteil entformt.

### Man unterscheidet

1. Plastifizieren / Aufschmelzen
2. Einspritzphase (Füllvorgang)
3. Nachdruckphase (wegen thermischer Kontraktion bei der Kristallisation)
4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Bauteil gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung.

Das erfindungsgemäß zu verwendende Spritzguss-Verfahren zur Herstellung eines erfindungsgemäßen Wandelelements arbeitet bei Schmelztemperaturen im Bereich von 230 bis 330°C, bevorzugt von 250 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Erfindungsgemäß einzusetzende Kunststoffe sind Polyester, Polyamide oder Polyalkylene.

Zur Klarstellung sei angemerkt, dass vom Rahmen der Erfindung alle aufgeführten, allgemeinen oder in Vorzugsbereichen genannten Definitionen und Parameter in beliebigen Kombinationen umfasst sind.

Zur Herstellung von erfindungsgemäß einzusetzenden Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung der im Stoffgemisch einzusetzenden Polyamide verlaufen bevorzugt über die Polykondensation in der Schmelze. Erfindungsgemäß wird hierunter auch die hydrolytische Polymerisation von Lactamen als Polykondensation verstanden.

Erfindungsgemäß bevorzugte Polyamide sind teilkristalline oder amorphe Polyamide, die ausgehend von Diaminen und Dicarbonsäuren und/oder Lactamen mit wenigstens 5 Ringgliedern oder entsprechenden Aminosäuren hergestellt werden können. Als Edukte kommen bevorzugt aliphatische und/oder aromatische Dicarbonsäuren, besonders bevorzugt Adipinsäure, 2,2,4-Trimethyladipinsäure, 2,4,4-Trimethyladipinsäure, Azelainsäure, Sebazinsäure, Isophthalsäure, Terephthalsäure, aliphatische und/oder aromatische Diamine, besonders bevorzugt Tetramethylendiamin, Pentamethylendiamin, Hexamethylendiamin, 1,9-Nonandiamin, 2,2,4- und 2,4,4-Trimethylhexamethylendiamin, die Isomeren Diaminodicyclohexylmethane, Diaminodicyclohexylpropane, Bis-aminomethyl-cyclohexan, Phenylendiamine, Xylylendiamine, Aminocarbonsäuren, insbesondere Aminocapronsäure, oder die entsprechenden Lactame in Betracht. Copolyamide aus mehreren der genannten Monomeren sind eingeschlossen.

Besonders bevorzugt sind Polyamid 6, Polyamid 66 und Caprolactam als Comonomer enthaltende Copolyamide.

Es können außerdem Anteile von rezyklierten Polyamid-Formmassen und / oder Faserrezyklaten enthalten sein.

Die erfindungsgemäß einzusetzenden thermoplastischen, bevorzugt teilaromatischen, Polyester sind ausgewählt aus der Gruppe der Polyalkylenterephthalate, bevorzugt ausgewählt aus der Gruppe der Polyethylentherephthalate, der Polytrimethylenterephthalate und der Polybutylenterephthalate, besonders bevorzugt der Polybutylenterephthalate und Polyethylenterephthalate, ganz besonders bevorzugt des Polybutylenterephthalats.

Unter teilaromatischen Polyestern versteht man Materialien, die neben aromatischen Molekülteilen auch aliphatische Molekülteile enthalten.

Polyalkylenterephthalate im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80 Mol-%, vorzugsweise 90 Mol-%, bezogen auf die Dicarbonsäure, Terephthalsäurereste und mindestens 80 Mol-%, vorzugsweise mindestens 90 Mol-%, bezogen auf die Diolkomponente, Ethylenglykol- und/oder Propandiol-1,3-und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder Reste aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure, Cyclohexandicarbonsäure.

Die bevorzugten Polyalkylenterephthalate können neben Ethylen- bzw. Propandiol-1,3- bzw. Butandiol-1,4-glykolresten bis zu 20 Mol-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethyl-hexandiol-1,3 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan (DE-A 24 07 674 (= US 4 035 958), DE-A 24 07 776, DE-A 27 15 932 (=US 4 176 224)).

Die Polyalkylenterephthalate können durch Einbau relativ kleiner Mengen 3- oder 4-wertiger Alkohole oder 3- oder 4-basischer Carbonsäuren, wie sie z.B. in der DE-A 19 00 270 (= US-A 3 692 744) beschrieben sind, verzweigt werden. Beispiele für bevorzugte Verzweigungsmittel sind Trimesinsäure, Trimellitsäure, Trimethylolethan und -propan und Pentaerythrit.

Bevorzugt werden, nicht mehr als 1 Mol-% des Verzweigungsmittels, bezogen auf die Säurekomponente verwendet.

Besonders bevorzugt sind Polyalkylenterephthalate, die allein aus Terephthalsäure und deren reaktionsfähigen Derivaten (z.B. deren Dialkylestern) und Ethylenglykol und/oder Propandiol-1,3 und/oder Butandiol-1,4 hergestellt werden (Polyethylen- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt werden, besonders bevorzugte Copolyester sind Poly-(ethylenglykol/butandiol-1,4)-terephthalate.

Die Polyalkylenterephthalate besitzen im allgemeinen eine intrinsische Viskosität von ca. 0,3 cm3 /g bis 1,5 cm3/g, vorzugsweise 0,4 cm3/g bis 1,3 cm³/g, besonders bevorzugt 0,5 cm3/g bis 1,0 cm3/g jeweils gemessen in Phenovo-Dichlorbenzol (1:1 Gew.-Teile) bei 25°C.

Die erfindungsgemäß einzusetzenden thermoplastischen Polyester können auch im Gemisch mit anderen Polyestern und/oder weiteren Polymeren eingesetzt werden.

In einer bevorzugten Ausführungsform werden die erfindungsgemäß einzusetzenden Polyamide oder Polyester mit wenigstens einem Fließverbesserer eingesetzt. Bevorzugt werden dafür wenigstens ein Fließverbesserer der Reihe
1) eines Copolymerisats aus mindestens einem Olefin, vorzugsweise einem α-Olefin, mit mindestens einem Methacrylsäureester oder Acrylsäureester eines aliphatischen Alkohols, vorzugsweise eines aliphatischen Alkohols mit 1-30 Kohlenstoffatomen, wobei der MFI des Copolymerisats B1) 100 g/10 min, vorzugsweise 150 g/10 min nicht unterscheidet oder
2) eines hoch- oder hyperverzweigten Polycarbonats mit einer OH-Zahl von 1 bis 600 mg KOH/g Polycarbonat (gemäß DIN 53240, Teil 2) oder
3) eines hoch- oder hyperverzweigten Polyesters des Typs AₓB_{y} mit x mindestens 1,lund y mindestens 2,1 ausgewählt.

Im Bezug auf die Fließverbesserer sei auf DE 10 2006 020 984 Al verwiesen deren Inhalt von der vorliegenden Anmeldung vollumfänglich mit umfasst wird.

Erfindungsgemäß in einer besonders bevorzugten Ausführungsform zusammen mit dem Polyamid oder Polyester einzusetzende Fließverbesserer sind Copolymerisate aus mindestens einem Olefin, bevorzugt α-Olefin und mindestens einem Methacrylsäureester oder Acrylsäureester eines aliphatischen Alkohols, wobei der MFI des Copolymerisats größer 10 g / 10 min ist, bevorzugt größer 150 g / 10 min und besonders bevorzugt größer 300 g / 10 min ist. In einer bevorzugten Ausführungsform besteht das Copolymerisat zu weniger als 4 Gew.-Teilen, besonders bevorzugt zu weniger als 1,5 Gew.-Teilen und ganz besonders bevorzugt zu 0 Gew.-Teilen aus Monomerbausteinen, die weitere reaktive funktionelle Gruppen ausgewählt aus der Gruppe umfassend Epoxide, Oxetane, Anhydride, Imide, Aziridine, Furane, Säuren, Amine, Oxazoline enthalten.

Geeignete Olefine, bevorzugt α-Olefine, als Bestandteil der Copolymerisate weisen bevorzugt zwischen 2 und 10 Kohlenstoff Atomen auf und können unsubstituiert oder mit einer oder mehreren aliphatischen, cycloaliphatischen oder aromatischen Gruppen substituiert sein.

Bevorzugte Olefine sind ausgewählt aus der Gruppe umfassend Ethen, Propen, 1-Buten, 1-Penten, 1-Hexen, 1-Octen, 3-Methyl-1-penten. Besonders bevorzugte Olefine sind Ethen und Propen, ganz besonders bevorzugt ist Ethen.

Ebenfalls geeignet sind Mischungen der beschriebenen Olefine.

In einer weiteren bevorzugten Ausführungsform werden die weiteren reaktiven funktionellen Gruppen des als Fließverbesserer einzusetzenden Copolymerisates, ausgewählt aus der Gruppe umfassend Epoxide, Oxetane, Anhydride, Imide, Aziridine, Furane, Säuren, Amine, Oxazoline, ausschließlich über die Olefine in das als Fließverbesserer einzusetzende Copolymer eingebracht.

Der Gehalt des Olefine im als Fließverbesserer einzusetzenden Copolymerisat liegt zwischen 50 und 90 Gew.-Teilen, bevorzugt zwischen 55 und 75 Gew.-Teilen.

Das als Fließverbesserer einzusetzende Copolymerisat wird weiterhin definiert durch den zweiten Bestandteil neben dem Olefin. Als zweiter Bestandteil werden Alkylester oder Arylalkylester der Acrylsäure eingesetzt, deren Alkyl- oder Arylalkylgruppe aus 1-30 Kohlenstoffatomen gebildet wird. Die Alkyl- oder Arylalkylgruppe kann dabei linear oder verzweigt sein sowie cycloaliphatische oder aromatische Gruppen enthalten, daneben auch durch eine oder mehrere Ether- oder Thioetherfunktionen substituiert sein. Geeignete Acrylsäureester in diesem Zusammenhang sind auch solche, die aus einer Alkoholkomponente synthetisiert wurden, die auf Oligoethylenglycol oder Oligopropylenglycol mit nur einer Hydroxylgruppe und maximal 30 C-Atomen basieren.

Bevorzugt kann die Alkylgruppe oder Arylalkylgruppe des Acrylsäureesters ausgewählt sein aus der Gruppe umfassend Methyl, Ethyl, n-Propyl, iso-Propyl, n-Butyl, iso-Butyl, tert-Butyl, sec-Butyl, 1-Pentyl, 1-Hexyl, 2-Hexyl, 3-Hexyl, 1-Heptyl, 3-Heptyl, 1-Octyl, 1-(2-Ethyl)-hexyl, 1-Nonyl, 1-Decyl, 1-Dodecyl, 1-Lauryl oder 1-Octadecyl. Bevorzugt sind Alkylgruppen oder Arylalkylgruppen mit 6-20 Kohlenstoffatomen. Bevorzugt sind insbesondere auch verzweigte Alkylgruppen, die im Vergleich zu linearen Alkylgruppen gleicher Anzahl an Kohlenstoffatomen zu einer niedrigeren Glasübergangs-Temperatur T_{G} führen.

Erfindungsgemäß besonders bevorzugt werden als Fließverbesserer Copolymerisate eingesetzt, bei denen das Olefin mit Acrylsäure-(2-ethyl)-hexylester copolymerisiert wird. Ebenfalls geeignet sind Mischungen der beschriebenen Acrylsäureester.

Bevorzugt ist hierbei die Verwendung von mehr als 60 Gew.-Teilen, besonders bevorzugt mehr als 90 Gew.-Teilen und ganz besonders bevorzugt die Verwendung von 100 Gew.-Teilen Acrylsäure-(2-ethyl)-hexylester bezogen auf die Gesamtmenge an Acrylsäureester im Copolymerisat.

In einer weiteren bevorzugten Ausführungsform werden die weiteren reaktiven funktionellen Gruppen im Copolymerisat ausgewählt aus der Reihe Epoxide, Oxetane, Anhydride, Imide, Aziridine, Furane, Säuren, Amine, Oxazoline, wobei diese ausschließlich über die Acrylsäureester in das Copolymer eingebracht werden.

Der Gehalt der Acrylsäureester am Copolymerisat liegt zwischen 10 und 50 Gew.-Teilen, bevorzugt zwischen 25 und 45 Gew.-Teilen.

Erfindungsgemäß einzusetzende Polyalkylene sind bevorzugt Polypropylen oder Polyethylen.

In einer bevorzugten Ausführungsform der vorliegenden Erfindung werden für die sogenannten verstärkten Kunststoffe Formmassen eingesetzt, die zusätzlich zur Polymerkomponente 0,001 bis 75 Gew.-Teile, vorzugsweise 10 bis 70 Gew.-Teile, besonders bevorzugt 20 bis 65 Gew.-Teile insbesondere bevorzugt 30-65 Gew.-Teile wenigstens eines Füll- oder Verstärkungsstoffes enthalten, wobei die Gew.-Teile auf 99,99 bis 10 Gew.-Teile Kunststoff bezogen sind.

Als Füllstoff oder Verstärkungsstoff können auch Mischungen aus zwei oder mehr unterschiedlichen Füllstoffen und/oder Verstärkungsstoffen beispielsweise auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern und/oder Glasfasern eingesetzt werden. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Besonders bevorzugt werden mineralische teilchenförmige Füllstoffe auf der Basis von Talk, Wollastonit, Kaolin und/oder Glasfasern, insbesondere besonders bevorzugt Glasfasern, eingesetzt.

Insbesondere für Anwendungen, in denen Isotropie bei der Dimensionsstabilität und eine hohe thermische Dimensionsstabilität gefordert wird, wie beispielsweise in Kfz-Anwendungen für Karosserieaußenteile, werden bevorzugt mineralische Füllstoffe eingesetzt, insbesondere Talk, Wollastonit oder Kaolin.

Besonders bevorzugt werden ferner auch nadelförmige mineralische Füllstoffe eingesetzt. Unter nadelförmigen mineralischen Füllstoffen wird erfindungsgemäß ein mineralischer Füllstoff mit stark ausgeprägtem nadelförmigen Charakter verstanden. Als Beispiel seien nadelförmige Wollastonite genannt. Bevorzugt weist das Mineral ein Länge : Durchmesser - Verhältnis von 2:1 bis 35:1, besonders bevorzugt von 3:1 bis 19:1, insbesondere bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm, bestimmt mit einem CILAS GRANULOMETER.

Wie bereits oben beschrieben kann der Füllstoff und/oder Verstärkungsstoff gegebenenfalls oberflächenmodifiziert sein, beispielsweise mit einem Haftvermittler bzw. Haftvermittlersystem z.B. auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Die erfindungsgemäß besonders bevorzugt einzusetzenden Glasfasern, die im Allgemeinen einen Faserdurchmesser zwischen 7 und 18 µm, bevorzugt zwischen 9 und 15 µm haben, werden als Endlosfasern oder als geschnittene oder gemahlene Glasfasern zugesetzt. Die Fasern können mit einem geeigneten Schlichtesystem und einem Haftvermittler bzw. Haftvermittlersystem z.B. auf Silanbasis ausgerüstet sein.

Gebräuchliche Haftvermittler auf Silanbasis für die Vorbehandlung sind Silanverbindungen beispielsweise der allgemeine Formel (I)

(X-(CH₂)_{q})ₖ-Si-(O-CᵣH₂ᵣ₊₁)₄₋ₖ (I)

in der die Substituenten folgende Bedeutung haben:
X für NH₂-, HO- oder 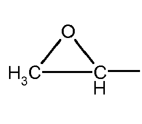 steht,
q für eine ganze Zahl von 2 bis 10, bevorzugt 3 bis 4 steht,
r für eine ganze Zahl von 1 bis 5, bevorzugt 1 bis 2 steht und
k für eine ganze Zahl von 1 bis 3, bevorzugt 1 steht.

Bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d97- bzw. d50-Wert aufweisen, als die ursprünglich eingesetzten Füllstoffe. Die Glasfasern können bedingt durch die Verarbeitung zur Formmasse bzw. Formkörper in der Formmasse bzw. im Formkörper kürzere Längenverteilungen als ursprünglich eingesetzt aufweisen.

In einer alternativen bevorzugten Ausführungsform können die einzusetzenden Kunststoffe zusätzlich zu den Füllstoffen oder anstelle der Füllstoffe 0,001 bis 30 Gew.-Teile, vorzugsweise 5 bis 25 Gew.-Teile, besonders bevorzugt 9 bis 19 Gew.-Teile mindestens eines Flammschutzadditivs enthalten, wobei die Gew.-Teile wiederum auf 99,99 - 10 Gew.-Teile Kunststoff bezogen sind.

Als Flammschutzmittel können handelsübliche organische Halogenverbindungen mit Synergisten oder handelsübliche organische Stickstoffverbindungen oder organisch/anorganische Phosphorverbindungen einzeln oder im Gemisch eingesetzt werden. Auch mineralische Flammschutzadditive wie Magnesiumhydroxid oder Ca-Mg-Carbonat-Hydrate (z.B. DE-A 4 236 6 122(= CA 210 9024 A1)) können eingesetzt werden. Ebenso kommen Salze aliphatischer oder aromatischer Sulfonsäuren in Frage. Als halogenhaltige, insbesondere bromierte und chlorierte Verbindungen seien beispielhaft genannt: Ethylen-1,2-bistetrabromphthalimid, epoxidiertes Tetrabrombisphenol-A-Harz, Tetrabrombisphenol-A-oligocarbonat, Tetrachlorbisphenol-A-oligocarbonat, Pentabrompolyacrylat, bromiertes Polystyrol und Decabromdiphenylether. Als organische Phosphorverbindungen sind z.B. die Phosphorverbindungen gemäß WO-A 98/17720 (= US 6 538 8 024) geeignet, wie z.B. Triphenylphosphat (TPP), Resorcinol-bis-(diphenylphosphat) (RDP) und die daraus abgeleiteten Oligomere sowie Bisphenol-A-bis-diphenylphosphat (BDP) und die daraus abgeleiteten Oligomere, ferner organische und anorganische Phosphonsäurederivate und deren Salze, organische und anorganische Phosphinsäurederivate und deren Salze, insbesondere Metalldialkylphosphinate wie z.B. Aluminium-tris[dialkylphosphinate] oder Zink-bis[dialkylphosphinate], außerdem roter Phosphor, Phosphite, Hypophosphite, Phospinoxide, Phosphazene, Melaminpyrophosphat und deren Mischungen. Als Stickstoffverbindungen kommen solche aus der Gruppe der Allantoin-, Cyanursäure-, Dicyandiamid, Glycouril-, Guanidin- Ammonium- und Melaminderivate, bevorzugt Allantoin, Benzoguanamin, Glykouril, Melamin, Kondensationsprodukte des Melamins z.B. Melem, Melam oder Melom bzw. höher kondensierte Verbindungen dieses Typs und Addukte des Melamins mit Säuren wie z.B. mit Cyanursäure (Melamincyanurat), Phosphorsäure (Melaminphosphat) oder kondensierten Phosphorsäuren (z.B. Melaminpolyphosphat) in Frage. Als Synergisten sind z.B. Antimonverbindungen, insbesondere Antimontrioxid, Natriumantimonat und Antimonpentoxid, Zinkverbindungen wie z.B. Zinkborat, Zinkoxid, Zinkphosphat und Zinksulfid, Zinnverbindungen wie z.B. Zinnstannat und Zinnborat sowie Magnesiumverbindungen wie z.B. Magnesiumoxid, Magnesiumcarbonat und Magensiumborat geeignet. Auch können dem Flammschutzmittel sogenannte Kohlenstoffbildner wie z.B. Phenol-Formaldehydharze, Polycarbonate, Polyphenylether, Polyimide, Polysulfone, Polyethersulfone, Polyphenylosulfide und Polyetherketone sowie Antitropfmittel wie Tetrafluorethylenpolymerisate zugesetzt werden.

In einer weiteren alternativen bevorzugten Ausführungsform können die erfindungsgemäß einzusetzenden Kunststoffe zusätzlich zu den Füllstoffen und/oder Flammschutzmitteln oder anstelle der Füllstoffe oder Flammschutzmittel noch gegebenenfalls 0,001 bis 10 Gew.-Teile, bevorzugt 0,05 bis 3 Gew.-Teile, besonders bevorzugt 0,1 bis 0,9 Gew.-Teile weitere übliche Additive enthalten, wobei die Gew.-Teile auf 99,99 - 10 Gew.-Teile Kunststoff bezogen sind.

Übliche Additive im Sinne der vorliegenden Erfindung sind z.B. Stabilisatoren (zum Beispiel UV-Stabilisatoren, Thermostabilisatoren, Gammastrahlenstabilisatoren), Antistatika, Fließhilfsmittel, Entformungsmittel, weitere Brandschutzadditive, Emulgatoren, Nukleierungsmittel, Weichmacher, Gleitmittel, Farbstoffe, Pigmente und Additive zur Erhöhung der elektrischen Leitfähigkeit. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

Als Stabilisatoren können zum Beispiel sterisch gehinderte Phenole, Hydrochinone, aromatische sekundäre Amine wie z.B. Diphenylamine, substituierte Resorcine, Salicylate, Benzotriazole und Benzophenone, sowie verschiedene substituierte Vertreter dieser Gruppen und deren Mischungen eingesetzt werden.

Als Pigmente bzw. Farbstoffe können z.B. Titandioxid, Zinksulfid, Ultramarinblau, Eisenoxid, Ruß, Phthalocyanine, Chinacridone, Perylene, Nigrosin und Anthrachinone eingesetzt werden.

Als Nukleierungsmittel können z.B. Natrium- oder Calciumphenylphosphinat, Aluminiumoxid, Siliziumdioxid sowie bevorzugt Talkum eingesetzt werden.

Als Gleit- und Entformungsmittel können z.B. Esterwachse, Pentaerytritoltetrastearat (PETS), langkettige Fettsäuren (z.B. Stearinsäure oder Behensäure) und Ester, deren Salze (z.B. Ca- oder Zn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse eingesetzt werden.

Als Weichmacher können zum Beispiel Phthalsäuredioctylester, Phthalsäuredibenzylester, Phthalsäurebutylbenzylester, Kohlenwasserstofföle, N-(n-Butyl)benzolsulfonamid eingesetzt werden.

Als Additive zur Erhöhung der elektrischen Leitfähigkeit können Ruße, Leitfähigkeitsruße, Carbonfibrillen, nanoskalige Grafit- und Kohlenstofffasern, Graphit, leitfähige Polymere, Metallfasern sowie andere übliche Additive zur Erhöhung der elektrischen Leitfähigkeit zugesetzt werden. Als nanoskalige Fasern können bevorzugt sogenannte "single wall Kohlenstoff-Nanotubes" oder "multi wall Kohlenstoff-Nanotubes" (z.B. der Firma Hyperion Catalysis) eingesetzt werden.

Die vorliegende Erfindung betrifft aber noch ein Verfahren zur Gewichteinsparung eines Spritzgießteils dessen Bauteilwand die Gestalt einer geschlossenen Leichtbaugitterstruktur aufweist, dadurch gekennzeichnet, dass ein thermoplastischer Kunststoff in einem einzigen Prozessschritt im Ausspritzvorgang über die Gitterstege weitläufig sich im Bauteil verteilt und die dünnen Flächen in den Zwischenräumen der Gitterstruktur aus der Gitterstruktur heraus ausfüllt, wobei man ein Rippen/Grundwanddicken-Verhältnis zwischen 10:1 bis 3:1 (Endwerte eingeschlossen) erhält.

Die vorliegende Erfindung betrifft aber auch die Verwendung einer erfindungsgemäß(en) (hergestellten) geschlossenen spritzgegossenen Leichtbaugitterstruktur eines Spritzgießteils zum Einsatz im automotive oder im non-automotive Bereich.

Erfindungsgemäß bevorzugter Einsatz einer solchen geschlossenen spritzgegossenen Leichtbaugitterstruktur im automotive-Bereich sind komplette Frontends, Fußgängerschutz Beam, reine Schlossbrücken für Motorhauben, Kofferraumdeckel, Stoßfängerverkleidungen, Stoßfängerverkleidungsversteifungsteile, Dachspriegel vorne oder hinten, Dachrahmen, Dachmodule (gesamtes Dach), Schiebedach-Trägerteile, Armaturentafeln, Armaturentafelträgerteile (Cross Car Beam), Feuerwand, Tütverkleidungen, Türaußenbeplankungen, Kotflügel, Kotflügelbänke, Crash Boxen, Rear Ends, Reserveradmulden, Motorhauben, Motorabdeckungen, Wasserkastenbank, Fahrzeugboden, Heckklappen, Sitzstrukturen, Rückenlehnen, Sitzschalen, Rücksitzlehnen mit und ohne Gurtintegration, Hutablagen, Ölwannen, Ventildeckel oder Motorraumabdeckungen.

Daneben kann der Einsatz aber auch im non-automotive Bereich erfolgen, bevorzugt in Gehäusen und Strukturen von E/E Geräten, Haushaltsgeräten, Möbeln, Heizthermen, etc.

Selbstverständlich eignen sich die erfindungsgemäßen Leichtbauteile aber auch zum Einsatz in Bahnfahrzeugen, Flugzeugen, Schiffen, Schlitten oder sonstigen Fortbewegungsmitteln, wo es auf leichte Konstruktionen ankommt.

Die vorliegende Erfindung betrifft daher auch ein Verfahren zur Gewichtseinsparung eines Formteils dessen Bauteilwand die Gestalt einer erfindungsgemäßen geschlossenen spritzgegossenen Leichtbaugitterstruktur aufweist, dadurch gekennzeichnet, dass ein thermoplastischer Kunststoff in einem einzigen Prozessschritt im Pressverfahren die Gitterstege und die dünnen Flächen in den Zwischenräumen der Gitterstruktur ausfüllt, wobei man ein Rippen/Grund-wanddickenverhältnis zwischen 10:1 bis 3:1 erhält.

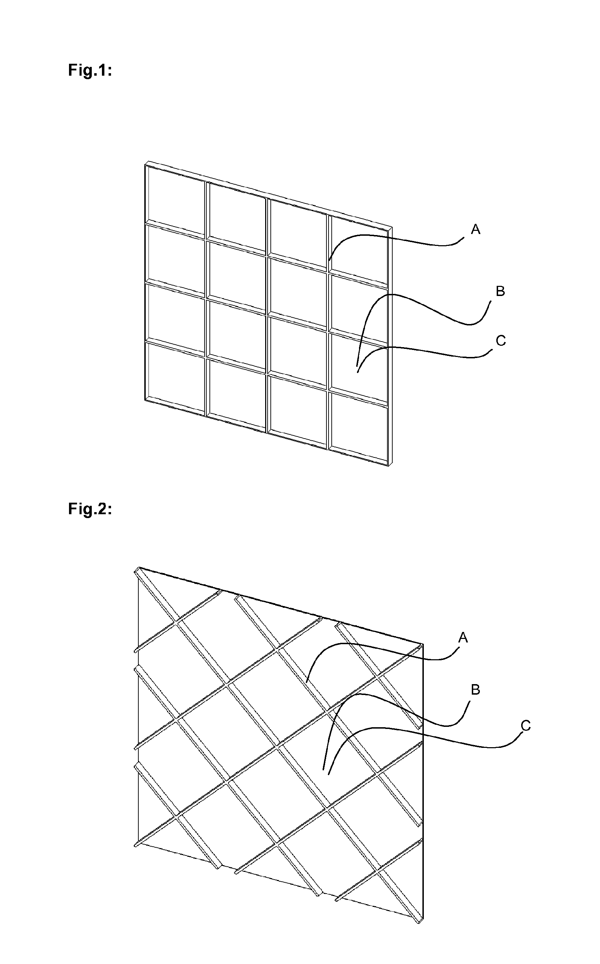

- Fig. 1: zeigt ein erfindungsgemäß hergestelltes Flächenelement mit horizontaler/vertikaler Gitterstruktur. A = Gitterstruktur, B = Gitterzwischenraum, C = dünne Schließfläche.
- Fig. 2: zeigt ein erfindungsgemäß hergestelltes Flächenelement mit diagonaler Gitterstruktur, wobei A, B und C die unter Fig. 1 genannten Bedeutungen haben.

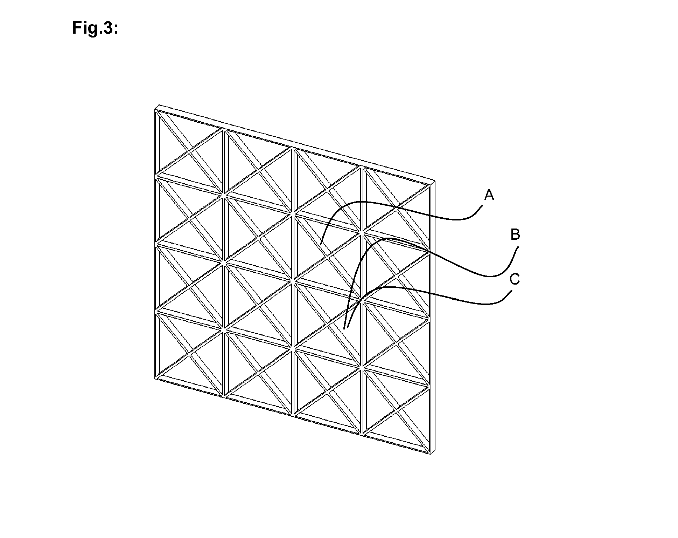

- Fig. 3: zeigt ein erfindungsgemäßes Flächenelement mit horizontaler/vertikaler und diagonaler Gitterstruktur, wobei A, B und C die unter Fig. 1 oder Fig. 2 genannten Bedeutungen haben.

### Beispiele

### Beispiel 1

Bei den Beispielen handelt es sich um einen Vergleich zwischen einer Platte/Wandelement mit kompakter Wandung (konstante Wanddicke) und einer Wandung nach dem Prinzip der vorliegenden Erfindung mit demselben Werkstoff. In dem Vergleich müssen die folgenden Bedingungen von beiden Wandelementen erfüllt sein: Steifigkeit größer oder gleich 1,875 N/mm und Fülldruck kleiner oder gleich 650 bar.

Die Bezeichnung "Kompakt" und "LBGS" (=Leichtbaugitterstruktur = erfindungsgemäß) in der Tabellenspalte "Bauart" kennzeichnet die Bauart/Bauform der Platte bzw. des Wandelements.

Vergleich einer spritzgegossenen Platte/Wandelement mit den Abmessungen Breite x Länge, 500mg x 500mm

| **Material** | **Bauart** | **Grundwanddicke/ Rippenbreite** | **Steifigkeit** | **Fülldruck** | **Masse** |
|---|---|---|---|---|---|
| Durethan BKV 30 | kompakt | 2,5mm | 1,875N/mm | 650 bar | 850g |
| Durethan BKV 30 | LBGS | 0,7mm / 5,5mm | 1,875N/mm | 650 bar | 441g |

Die Tabelle des Beispiel 1 zeigt, dass eine Platte/Wandelement, erfindungsgemäß hergestellt nach der geschlossene spritzgegossene Leichtbaugitterstruktur bei einem verstärkten Polyamid mit 30 % Glasfaseranteil, bei gleicher Biegesteifigkeit und einem Druckbedarf für den Spritzgießprozess von 650bar zu einer Gewichtreduktion von 48% führt.

### Beispiel 2

Vergleich einer spritzgegossenen Platte/Wandelement mit den Abmessungen Breite x Länge, 500mg x 500mm

| **Material** | **Bauart** | **Grundwanddicke/ Rippenbreite** | **Steifigkeit** | **Fülldruck** | **Masse** |
|---|---|---|---|---|---|
| Durethan BKV 30 XF | kompakt | 2,53mm | 1,875N/mm | 332 bar | 860g |
| Durethan BKV 30 XF | LBGS | 0,46mm / 3,8mm | 1,875N/mm | 650 bar | 383g |

Zwar ließe sich bei diesem Beispiel die Wanddicke der kompakten Platte/Wandelement und damit das Gewicht bis ein Fülldruck von 650 bar erreicht würde reduzieren, jedoch würde dann die Steifigkeit deutlich unter 1,875 N/mm liegen. Die Tabelle des Beispiel 2 zeigt, dass eine Platte /Wandelement erfindungsgemäß hergestellt na c h der geschlossene spritzgegossene Leichtbaugitterstruktur bei einem verstärkten Polyamid mit 30 % Glasfaseranteil und einem Fließverbesserer, bei gleicher Biegesteifigkeit und einem Druckbedarf für den Spritzgießprozess von 650bar zu einer Gewichtreduktion von 55% führt.

Durethan BKV 30 steht für Durethan BKV 30 H2.0 901510, einem Polyamid 6 mit 30% Glasfasern, wärmestabilisiert, gemäß Produktdatenblatt vom 15.November 2005 der Lanxess Deutschland GmbH, Leverkusen. ISO Formmassenbezeichnung: ISO 1874-PA 6, MHR,14-100, GF30

Durethan BKV 30 XF steht für Durethan DP BKV 30 XF 000000, einem Polyamid 6 mit 30% Glasfasern und einer verbesserten Fließfähigkeit gemäß Produktdatenblatt der Lanxess Deutschland GmbH, Leverkusen vom 3.Juli 2010. ISO Kurzbezeichnung: ISO 1874 PA 6, GR, 10-090, GF30.

## Patentansprüche

1. Geschlossene spritzgegossene Leichtbaugitterstruktur erhältlich unter Verwendung eines einzelnen thermoplastischen Kunststoffs indem im Spritzgießverfahren der Füllvorgang des Spritzgießteils in einem einzigen Prozessschritt über die Gitterstege und nicht über die Flächen erfolgt und die Gitterzwischenräume aus den Gitterstegen heraus als dünne Flächen geschlossen werden, wobei das Rippen/Grundwanddicken-Verhältnis zwischen 10:1 bis 3:1 1 beträgt.

2. Geschlossene spritzgegossene Leichtbaugitterstruktur gemäß Anspruch 1, **dadurch gekennzeichnet, dass** als thermoplastischer Kunststoff Polyamid, Polyester, Polyolefine, Polycarbonat, Acrylnitrilbutadienstyrole oder Polyalkylene, und deren Blends eingesetzt werden.

3. Geschlossene spritzgegossene Leichtbaugitterstruktur gemäß Anspruch 2, **dadurch gekennzeichnet, dass** dem Polyamid oder Polyester Fließhilfsmittel beigefügt werden.

4. Geschlossene spritzgegossene Leichtbaugitterstruktur gemäß Anspruch 3, **dadurch gekennzeichnet, dass** wenigstens ein Fließhilfsmittel der Reihe
1) mindestens ein Copolymerisat aus mindestens einem Olefin, vorzugsweise einem α-Olefin, mit mindestens einem Methacrylsäureester oder Acrylsäureester eines aliphatischen Alkohols, vorzugsweise eines aliphatischen Alkohols mit 1-30 Kohlenstoffatomen, wobei der MFI des Copolymerisats B1) 100 g/10 min, vorzugsweise 150 g/10 min nicht unterschreitet oder
2) mindestens ein hoch- oder hyperverzweigtes Polycarbonat mit einer OH-Zahl von 1 bis 600 mg KOH/g Polycarbonat (gemäß DIN 53240, Teil 2), oder
3) mindestens ein hoch- oder hyperverzweigtes Polyesters des Typs AₓB_{y} mit x mindestens 1,1 und y mindestens 2,1 eingesetzt wird.

5. Geschlossene spritzgegossene Leichtbaugitterstruktur gemäß der Ansprüche 2 bis 4, **dadurch gekennzeichnet, dass** wenigstens ein Füll- oder Verstärkungsstoff eingesetzt wird.

6. Geschlossene spritzgegossene Leichtbaugitterstruktur gemäß Anspruch 5, **dadurch gekennzeichnet, dass** als Füll- oder Verstärkungsstoff Glasfasern eingesetzt werden.

7. Geschlossene spritzgegossene Leichtbaugitterstruktur gemäß er Ansprüche 2 bis 6, **dadurch gekennzeichnet, dass** weitere übliche Additive oder Flammschutzadditive dem Kunststoff beigefügt werden.

8. Verfahren zur Gewichteinsparung eines Spritzgießteils in Gestalt einer geschlossenen Leichtbaugitterstruktur dessen Bauteilwand die Gestalt einer geschlossenen Leichtbaugitterstruktur aufweist, **dadurch gekennzeichnet, dass** ein thermoplastischer Kunststoff in einem einzigen Prozessschritt im Ausspritzvorgang über die Gitterstege weitläufig sich im Bauteil verteilt und die dünnen Flächen in den Zwischenräumen der Gitterstruktur aus der Gitterstruktur heraus ausfüllt, wobei man ein Rippen/Grundwanddicken-Verhältnis zwischen 10:1 bis 3:1 1 erhält.

9. Verwendung einer geschlossenen spritzgegossenen Leichtbaugitterstruktur gemäß der Ansprüche 1 bis 7 zum Einsatz im automotive oder im non-automotive Bereich.

10. Verfahren zur Gewichtseinsparung eines Formteils dessen Bauteilwand die Gestalt einer geschlossenen spritzgegossenen Leichtbaugitterstruktur gemäß der Ansprüche 1 bis 7 aufweist, **dadurch gekennzeichnet, dass** ein thermoplastischer Kunststoff in einem einzigen Prozessschritt im Pressverfahren die Gitterstege und die dünnen Flächen in den Zwischenräumen der Gitterstruktur ausfüllt, wobei man ein Rippen/Grundwanddickenverhältnis zwischen 10:1 bis 3:1 erhält.
